# EUROPÄISCHE PATENTSCHRIFT

(11) **EP 1 310 602 B1**
(45) Veröffentlichungstag und Bekanntmachung des Hinweises auf die Patenterteilung: **15.07.2009**
(21) Anmeldenummer: 02024320.0
(22) Anmeldetag: 02.11.2002
(51) Int. Cl.: E03B 1/04, E03C 1/00, F24D 17/00

(54) **Anlage zur Verwertung von Brauchwasser**
System for the re-use of grey water
Système pour la réutilisation de l'eau grise

(30) Priorität: 09.11.2001 DE 10156253
(43) Veröffentlichungstag der Anmeldung: 14.05.2003
(73) Patentinhaber: Hansgrohe AG, 77761 Schiltach (DE)
(72) Erfinder: Jeltsch, Thomas, 88094 Oberteuringen (DE)
(74) Vertreter: Schöndorf, Jürgen

(56) Entgegenhaltungen:
- EP-A- 0 174 554
- DE-A- 4 337 744
- DE-A- 19 906 999
- GB-A- 1 525 250

## Beschreibung

Es ist seit langem bekannt, dass man leicht verschmutztes Wasser in einem Haushalt noch ausnutzen kann. Es ist sowohl möglich, dieses Wasser für bestimmte Zwecke noch einmal zu verwenden, um dadurch den Trinkwasserverbrauch zu verringern. Da es sich bei dem leicht verschmutzten Wasser in vielen Fällen um warmes Wasser handelt, ist es auch möglich, die in diesem Wasser noch vorhandene Wärme auszunutzen.

Es ist bereits eine Anlage zur Rückgewinnung von Wärme aus Abwasser und zu dessen Weiterverwendung für die Toilettenspülung bekannt (DE 2908679). Hierbei wird für die Wärmerückgewinnung ein Wärmetauscher in Form eines schraubenlinienförmig gebogenen Rohrs verwendet. Dieser Wärmetauscher wird in den Brauchwassertank eingesetzt. Der Wärmetauscher wird von Trinkwasser oder sonstigem Wasser durchströmt, das erwärmt werden soll. Da das Brauchwasser einen gewissen Verschmutzungsgrad aufweist, neigt das schraubenlinienförmig gebogene Rohr zur Verschmutzung, was einerseits die Keimbildung in dem Brauchwassertank begünstigt und andererseits die Austauscheigenschaften des Wärmetauschers verschlechtert.

Bei einer weiteren Anlage dieser Art (AT 397114) sind zwei Wärmetauscher in Reihe geschaltet. Auch hier werden schraubenlinienförmig gebogene wasserdurchströmte Rohre verwendet, so dass das Problem der Verschmutzung des Wärmetauschers in dem Brauchwassertank ebenfalls vorhanden ist.

Bei einer weiteren Brauchwasseranlage zur Mehrfachnutzung von Trinkwasser (DE 19606577) ist ebenfalls einen Wärmetauscher in Form eines schraubenlinienförmig gebogenen Rohres in einem Brauchwassertank eingesetzt.

Es ist bereits eine Einrichtung zur Wärmerückgewinnung aus Brauchabwasser bekannt (DE 4337744), bei der das Fluid in einen Sammelbehälter von oben einläuft. Dort ist eine kegelförmige Leitwandung angeordnet, die eine Rohranordnung des Wärmetauschers trägt. Der Sammelbehälter enthält keine Umwälzeinrichtung.

Weiterhin bekannt ist ein Wärmeaustauscher zum Übertragen von Wärme aus Abwasser (EP 174554), bei dem senkrecht stehende ebene Wärmetauscherplatten in einem Behälter stehen. An der Unterseite ist eine Umwälzeinrichtung vorhanden, die das Wasser in dem Behälter um rührt.

Die Verwendung derartiger Wärmetauscherrohre geht von dem Gedanken aus, dass eine möglichst große Fläche zwischen dem warmen Brauchwasser und dem kalten Trinkwasser vorhanden sein muss, und dass der Zeitraum, während dessen die Wärme auf das kalte Wasser einwirkt, möglichst groß sein soll. Daher wird durch ein langes Rohr die Aufenthaltsdauer des kalten Trinkwassers verlängert.

Der Erfindung liegt die Aufgabe zu Grunde, eine Möglichkeit zu Verwertung von Brauchwasser zu schaffen, bei der die Gefahr der Verschmutzung im Brauchwassertank verringert wird.

Zur Lösung dieser Aufgabe schlägt die Erfindung eine Anlage mit den im Anspruch 1 genannten Merkmalen vor. Weiterbildungen der Erfindung sind Gegenstand von Unteransprüchen.

Im Gegensatz zum Stand der Technik wird also ein Wärmetauscher in dem Brauchwassertank angeordnet, der der Wärme des Brauchwassers dadurch besser ausgesetzt wird, dass das Brauchwasser in dem Tank umgewälzt wird. Dadurch streicht das Wasser im Tank ständig an der Wärmetauscheroberfläche vorbei, um auf diese Weise einen besseren Austausch der Wärme zu ermöglichen.

Es wird daher nicht mehr nötig, die Wärmeaustauscher in der Weise auszubilden, dass sie als spiralförmige oder schraubenlinienförmige Rohre ausgebildet sind. Dadurch verringert sich die Möglichkeit, dass sich im Brauchwassertank Verschmutzungen absetzen, die zu einer Verschlechterung der Wärmetauschereigenschaften der Anlage führen können.

In Weiterbildung der Erfindung ist daher vorgesehen , dass der Wärmetauscher für das Brauchwasser eine flächige in Strömungsrichtung nicht hinterschnittene und daher die Strömung im Brauchwassertank nicht störende Austauschoberfläche aufweist. Es kann sich beispielsweise um eine ebene oder auch eine zylinderförmige Oberfläche handeln, die also eine relativ große Fläche bildet, an der das Wasser im Brauchwassertank in einer nicht gestörten Strömung vorbei strömen kann. Auch wenn dadurch die Gesamtoberfläche des Wärmetauschers, die dem Brauchwasser zugeordnet ist, kleiner wird, wird durch das ständige Vorbeistreichen des warmen Wassers eine gute Ausnutzung der Wärme erreicht. Es ist möglich, die Oberfläche dadurch noch zu vergrößern, dass die Austauschfläche gewellt oder gerippt ist, wobei die Längsrichtung der Rippen oder Wellen von unten nach oben verläuft, also in Richtung der Wasserströmung. Durch diese Vergrößerung der Oberfläche wird ein nochmals verbesserter Wärmeübergang zwischen der Wärme des Brauchwassers und dem Inneren des Wärmeaustausches erreicht.

Erfindungsgemäß kann in Weiterbildung vorgesehen sein, einen Wärmetauscher in dem Brauchwassertank zentral anzuordnen. Beispielsweise kann eine zentrale Anordnung in Form einer flachen gegebenenfalls quaderförmigen Scheibe vorgesehen sein, die in einer senkrechten Ebene angeordnet wird. An beiden Seiten kann die Strömung des Wassers vorbei streichen, beispielsweise von unten nach oben.

Es ist ebenfalls möglich und wird von der Erfindung vorgeschlagen, dass mindestens ein Wärmetauscher in der Wand des Brauchwassertanks angeordnet wird. Falls es sich bei dem Brauchwassertank um einen quaderförmigen Behälter handelt, können beispielsweise Wärmetauscher in allen Außenwänden angeordnet werden. Je nach Art des Wärmetauschers kann dieser direkt vor der Wand des Brauchwassertanks angeordnet werden, wenn es sich beispielsweise um einen wasserdurchströmten oder einen von einem sonstigen Kühlmittel durchströmten Wärmetauscher handelt.

Es ist aber ebenfalls möglich und liegt im Rahmen der Erfindung, dass ein Teil der Wand des Brauchwassertanks die Wärmetauscheroberfläche eines Wärmetauschers bildet, der dann seine Wärme an der Außenseite des Brauchwassertanks beispielsweise an eine Luftzirkulation abgibt. Wenn der Wärmetauscher vollständig im Inneren des Tanks angeordnet wird, beispielsweise auch direkt vor der Wand, so ist es sinnvoll, die Wände des Brauchwassertanks thermisch zu isolieren.

Bei Brauchwassertanks, die dazu dienen, Brauchwasser zur Wiederverwendung als Grauwasser aufzubereiten und vorzuhalten, ist es bekannt, eine Umwälzeinrichtung für das Brauchwasser vorzusehen, die dazu dient, das Brauchwasser zu belüften. Beispielsweise gibt es die Möglichkeit, an einer unteren Stelle des Brauchwassertanks Luft einzuspeisen, die zu einer Verwirbelung und zur Erzeugung einer Strömung im Brauchwassertank dient. Es ist daher möglich, eine solche Belüftungseinrichtung so auszubilden, dass sie einerseits eine Belüftung des Brauchwassers bewirkt und andererseits eine gezielte Strömung erzeugt, um das Brauchwasser an den Wärmetauscheroberflächen des Wärmetauschers vorbei zu leiten. Solche Umwälzeinrichtungen sind ebenfalls bekannt, um mit Bakterien versehene Schwebkörper durch das Brauchwasser umzuwälzen. Hier wird also die Möglichkeit geschaffen, eine vorhandene Einrichtung dazu zu verwenden, gleichzeitig auch die Wärmetauschereigenschaften zu verbessern.

Die Erfindung schlägt vor, speziell ausgebildete Schwebkörper zu verwenden, nämlich relativ harte Schwebkörper. Während bei den bekannten Verfahren die Schwebekörper keine andere Aufgabe haben, als Träger für Bakterien zu bilden, erhalten sie hier eine zusätzliche Aufgabe. Sie sollen nämlich beim Vorbeistreichen an den Wasserströmung ausgesetzten Flächen des Wärmetauschers dazu dienen, Verunreinigungen zu entfernen. Daher ist es nach der erfindungsgemäßen Lehre sinnvoll, hier harte gegebenenfalls mit Kanten versehene Schwebkörper zu verwenden, die sogar eine Reinigung der Oberfläche durchführen können.

Weitere Merkmale, Einzelheiten und Vorzüge der Erfindung ergeben sich aus der folgenden Beschreibung zweier bevorzugter Ausführungsformen der Erfindung sowie anhand der Zeichnung. Hierbei zeigen:
- Figur 1: schematisch die Anordnung einer ersten Anlage zur Verwertung der Restwärme von Brauchwasser;
- Figur 2: ebenfalls schematisch eine zweite Anlage zur Verwertung der Wärme von Brauchwasser.

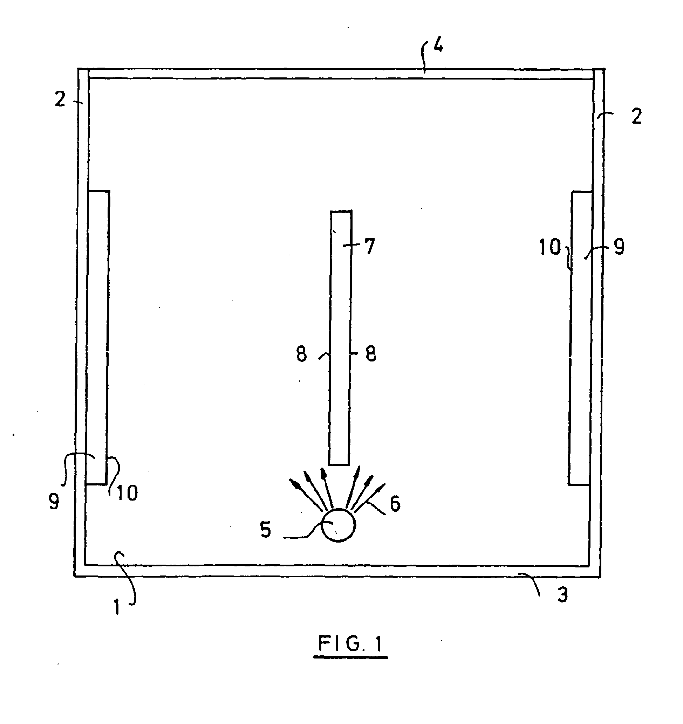

Figur 1 zeigt stark vereinfacht einen Brauchwassertank 1 in Form eines quaderförmigen Behälters. Der Behälter enthält vier Seitenwände 2, einen Boden 3 und einen Deckel 4. Alle Wände des Tanks 1 sind thermisch isoliert. In den Tank gelangt durch nicht dargestellte Leitungen Brauchwasser, das beispielsweise von einer Badewanne, einer Duschwanne, einem Waschbecken, möglicherweise auch von einer Waschmaschine stammt. Die Einrichtungen zum Zuführen, zum Abgeben und zum Entleeren des Brauchwassertanks 1 sind nicht dargestellt, da dies an sich bekannt ist.

In dem Brauchwassertank 1 ist im Bereich unmittelbar oberhalb des Bodens 3 ein Rohr 5 angeordnet, das horizontal verläuft, also senkrecht zur Zeichnungsebene. Das Rohr steht außerhalb des Tanks mit einer Druckluftquelle in Verbindung. Es durchquert an mindestens einer Stelle, gegebenenfalls auch an zwei Stellen, eine Wand des Brauchwassertanks.

Das Rohr 5 weist im Bereich der oberen Hälfte seines Umfangs eine Vielzahl von Öffnungen auf, durch die Luft zum Belüften des Brauchwassers ausströmt, was in der Zeichnung durch die Pfeile 6 angedeutet ist. Durch das Einströmen der Luft gelangt das Brauchwasser in eine Zirkulationsströmung, die das Wasser unmittelbar oberhalb des Rohrs 5 nach oben strömen lässt, so dass es an den Seitenwänden 2 wieder nach unten zurück strömt. Diese Strömung wird durch die Belüftungseinrichtung hervorgerufen und dient dazu, das Wasser an sich umzuwälzen und zu belüften. Diese Maßnahmen sind für die Wiederverwendung des Brauchwassers gedacht.

Unmittelbar oberhalb des Rohrs 5, mit einem gewissen Abstand von diesem, ist ein erster Wärmetauscher 7 angeordnet, der die Form einer flachen ebenen gegebenenfalls quaderförmigen Scheibe aufweist. Die Scheibe des Wärmetauscher 7 erstreckt sich oberhalb des Rohrs, also in einer senkrechten Ebene, und zwar von der Vorderseite zur Rückseite des Brauchwassertanks. Das durch die Belüftung in Bewegung besetzte Wasser streicht also an beiden gegenüberliegenden Seitenflächen 8 des Wärmetauschers 7 vorbei. Während dieser Dauer kann das Wasser seine Wärme an das Kühlmittel abgeben, das im Inneren des Wärmetauschers 7 vorhanden ist, beispielsweise Leitungswasser, Kältemittel oder Umgebungsluft. Wegen der glatten ebenen Oberfläche des Wärmetauschers 7 besteht die Gefahr einer Verschmutzung dieser Oberfläche nicht.

Wenn das Wasser nach oben strömt ist, so wird durch die Zirkulation dafür gesorgt, dass es im Bereich der beiden Seitenwände 2 wieder nach unten strömt. Dieses Wasser ist ebenfalls noch warm. Vor beiden dargestellten Seitenwänden 2 ist daher jeweils ein weiterer Wärmetauscher 9 angeordnet, der ebenfalls eine dem Brauchwasser ausgesetzte Wärmetauscheroberfläche 10 aufweist. Auch diese Fläche 10 ist glatt und eben ausgebildet, bietet also ebenfalls nicht die Möglichkeit der Verschmutzung. Das durch die Belüftungseinrichtung in Bewegung versetzte Wasser bildet auf beiden Seiten des mittleren Wärmetauscher 7 eine Art Walze, so dass es ständig an den Wärmetauscheroberflächen 8,10 vorbei streicht.

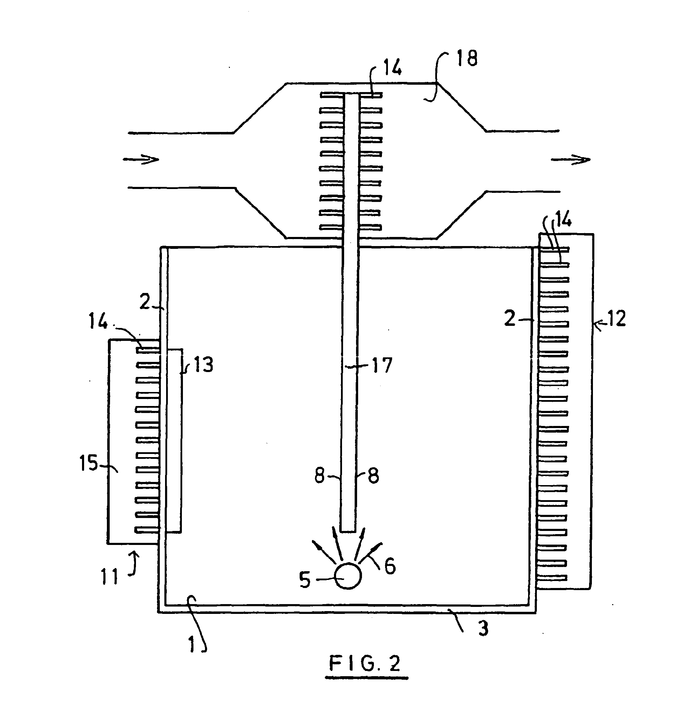

Nun zu Figur 2. Hier ist ebenfalls stark vereinfacht ein Brauchwassertank 1 dargestellt, oberhalb von dessen Boden 3 ein Belüftungsrohr 5 angeordnet ist. Im Bereich beider einander gegenüberliegender Seitenwände 2 sind Wärmetauscher 11,12 angeordnet. An der linken Seite ist ein Wärmetauscher 11 vorhanden, der durch die Seitenwand 2 hindurch an der Innenseite eine Wärmetauscheroberfläche aufweist. An der Außenseite der entsprechenden Seitenwand 2 weist der Wärmetauscher 11 eine Vielzahl von Rippen 14 auf, die innerhalb eines Kanals zum Durchführen von Luft angeordnet sind. Durch die Vielzahl der Rippen 14 vergrößert sich die Wärmeaustauschoberfläche zwischen dem Wärmetauscher und der zirkulierenden Luft in dem Kanal 15.

An der rechten Seite in Figur 2 bildet die Seitenwand 2 direkt die Wärmetauscheroberfläche des dort vorhandenen Wärmetauschers 12, der ebenfalls an der außerhalb des Brauchwassertanks angeordneten Seite eine Vielzahl von Rippen 14 aufweist.

In der Mitte des Brauchwassertanks 1 ist wiederum ein Wärmetauscher 17 angeordnet, der in etwa die gleiche Funktion aufweist wie der Wärmetauscher 7 der Figur 1. Er führt in diesem Fall durch die Oberseite des Tanks hindurch in einen Austauschraum 18, wo seine beiden Seiten mit einer Vielzahl von Rippen 14 versehen sind. Durch den Austauschraum 18 strömt Luft, die durch einen Kanal beispielsweise von links eingeleitet wird und nach rechts wieder heraus strömt. Hier erfolgt also eine Erwärmung von Luft, beispielsweise zum Beheizen von Räumen, während bei der Anlage der Figur 1 ein Kältemittel erwärmt wird, beispielsweise Leitungswasser, das als Duschwasser verwendet werden kann.
Die Wärmetauscher nach Figur 2 können natürlich entweder an ein Luftsystem oder an ein Flüssigkeitssystem zur weiteren Verwertung der Energie angeschlossen werden.

Selbstverständlich wird bei beiden Anlagen, ohne dass dies näher dargestellt ist, das Brauchwasser selbst wieder verwertet, beispielsweise für eine Toilettenspülung. Dazu braucht es aber nicht warm zu sein.

## Patentansprüche

1. Anlage zur Verwertung von Brauchwasser, mit
einem Brauchwassertank (1),
in den das Brauchwasser geleitet wird und aus dem es wieder entnommen wird,
einer Umwälzeinrichtung zum Erzeugen einer Zirkulationsströmung in dem Brauchwassertank (1),
mindestens einem Wärmetauscher (7, 9, 11, 12, 17), der dem Brauchwasser ausgesetzt ist, und
für das Brauchwasser eine flächige nicht hinterschnittene die Zirkulationsströmung im Brauchwassertank (1) nicht störende Austauschoberfläche (8, 10) aufweist,
**dadurch gekennzeichnet, dass**
mindesten ein Wärmetauscher (7, 17) unmittelbar oberhalb der Umwälzeinrichtung und derart angeordnet ist,
dass das in Bewegung gesetzte Wasser an beiden gegenüberliegenden Seitenflächen (8) des Wärmetauschers (7, 17) vorbei streicht.

2. Anlage nach Anspruch 1 , bei der mindestens ein Wärmetauscher (7, 17) in dem Brauchwassertank (1) angeordnet ist, vorzugsweise zentral und symmetrisch.

3. Anlage nach einem der vorhergehenden Ansprüche, bei der mindestens ein zusätzlicher Wärmetauscher (9, 11, 12) in der Wand (2) des Brauchwassertanks (1) angeordnet ist.

4. Anlage nach einem der vorhergehenden Ansprüche, bei der mindestens die Innenseite einer Außenwand des Brauchwassertanks (1) eine Austauschoberfläche mindestens eines zusätzlichen Wärmetauschers (12) bildet.

5. Anlage nach einem der vorhergehenden Ansprüche, bei der die Außenseite mindestens einer Außenwand (2) des Brauchwassertanks (1) eine Austauschoberfläche mindestens eines zusätzlichen Wärmetauschers (12) bildet.

6. Anlage nach einem der vorhergehenden Ansprüche, bei der mindestens ein Wärmetauscher (11, 12) an seiner Abgabeseite luftumströmt ist.

7. Anlage nach einem der vorhergehenden Ansprüche, bei der mindestens ein Wärmeaustauscher (7, 9, 17) an seiner Abgabeseite wasserdurchströmt ist.

8. Anlage nach einem der vorhergehenden Ansprüche, bei der die Wände (2), der Boden (3) und die Oberseite des Brauchwassertanks (1) isoliert sind.

9. Anlage nach einem der vorhergehenden Ansprüche, bei der die Umwälzeinrichtung von einer Belüftungseinrichtung gebildet ist.

## Claims

1. A system for recycling service water having
a service-water tank (1),
into which service water is conducted, and from which service water is withdrawn,
a circulation device for generating a circulating flow in the service-water tank (1),
at least one heat exchanger (7, 9, 11, 12, 17)
that is exposed to the service water, and has
an extended, non-undercut, exchanging surface (8, 10) for service water that will not interfere with the circulation in the service-water tank (1),
wherein
at least one heat exchanger (7, 17) is arranged immediately above the circulation device
such that water that has been set in motion will flow past both lateral opposed surfaces (8) of the heat exchanger(s) (7, 17).

2. A system according to claim 1, wherein at least one heat exchanger (7, 17) is arranged in the service-water tank (1), preferably centred and symmetrically arranged therein.

3. A system according to either of the foregoing claims, wherein at least one additional heat exchanger (9, 11, 12) is arranged in the wall (2) of the service-water tank (1).

4. A system according to any of the foregoing claims, wherein at least the inner surface of an outer wall of the service-water tank (1) forms an exchanging surface of at least one additional heat exchanger (12).

5. A system according to any of the foregoing claims, wherein the outer surface of at least one outer wall (2) of the service-water tank (1) forms an exchanging surface of at least one additional heat exchanger (12).

6. A system according to any of the foregoing claims, wherein air flows around the output side of at least one heat exchanger (11, 12).

7. A system according to any of the foregoing claims, wherein water flows through the output side of at least one heat exchanger (7, 9, 17).

8. A system according to any of the foregoing claims, wherein the walls (2), base (3), and top of the service-water tank (1) are insulated.

9. A system according to any of the foregoing claims, wherein the circulation device is formed from a ventilation device.

## Revendications

1. Installation destinée à la réutilisation de l'eau pour usages sanitaires, comprenant
un réservoir d'eau pour usages sanitaire (1),
vers lequel est conduite cette eau et dont elle est ensuite prélevée,
un dispositif de maintien en circulation destiné à générer un flux circulant dans le réservoir d'eau pour usages sanitaires (1),
au moins un échangeur thermique (7, 9, 11, 12, 17)
exposé à cette eau pour usages sanitaires et,
pour cette eau, une grande surface d'échange (8, 10) non contre-dépouillée et ne perturbant pas le flux circulant dans le réservoir d'eau pour usages sanitaires (1),
**caractérisée en ce que**
au moins un échangeur thermique (7, 17) est agencé directement au dessus du dispositif de maintien en circulation, de telle sorte que
l'eau mise en mouvement s'écoule le long les deux surfaces latérales opposées (8) de l'échangeur thermique (7, 17).

2. Installation selon la revendication 1, dans laquelle au moins un échangeur thermique (7, 17) est agencé dans le réservoir d'eau pour usages sanitaires (1), de préférence de façon centrale et symétrique.

3. Installation selon l'une des revendications précédentes, dans laquelle au moins un échangeur thermique supplémentaire (9, 11, 12) a été agencé dans la paroi (2) du réservoir d'eau pour usages sanitaires (1).

4. Installation selon l'une des revendications précédentes, dans laquelle au moins le côté intérieur d'une paroi extérieure composant le réservoir d'eau pour usages sanitaires (1) forme une surface d'échange d'au moins un échangeur thermique supplémentaire (12).

5. Installation selon l'une des revendications précédentes, dans laquelle le côté extérieur d'au moins une paroi extérieure (2) du réservoir d'eau pour usages sanitaires (1) forme une surface d'échange d'au moins un échangeur thermique supplémentaire (12).

6. Installation selon l'une des revendications précédentes, dans laquelle au moins un échangeur thermique (11, 12) est baigné par un flux d'air sur son côté sortie.

7. Installation selon l'une des revendications précédentes, dans laquelle au moins un échangeur thermique (7, 9, 17) est baigné par un flux d'eau sur son côté sortie.

8. Installation selon l'une des revendications précédentes, dans laquelle les parois (2), le fond (3) et le dessus du réservoir d'eau pour usages sanitaires (1) ont été isolés.

9. Installation selon l'une des revendications précédentes, dans laquelle le dispositif de maintien en circulation est formé par un dispositif d'apport d'air.
